# DEMANDE DE BREVET EUROPEEN

(11) **EP 1 296 258 A1**
(43) Date de publication de la demande: **26.03.2003**
(21) Numéro de dépôt: 01402439.2
(22) Date de dépôt: 24.09.2001
(51) Int. Cl.: G06F 17/60

(54) **Procédé d'établissement de relations commerciales privilégiées entre un fournisseur et au moins un client, et système de fourniture ad-hoc**

(71) Demandeur: L'air Liquide Société Anonyme pour l'étude et l'exploitation des procédés Georges Claude, 75321 Paris Cédex 07 (FR)
(72) Inventeur: Arriulou, Pascal, 94410 Saint Maurice (FR); Pousset, Emmanuel, 75003 Paris (FR)
(74) Mandataire: Le Moenner, Gabriel

(57) **Abrégé**

Une unité d'élaboration de décisions (1), couplée au poste de commande (G) d'une unité de transformation (U) élaborant un bien industriel (B), typiquement un fluide industriel, détecte, en fonction d'informations externes (SD, RI, 5, 3) des surcapacités de production temporaires, élabore et émet en ligne, à destination de clients potentiels (C), des messages informant d'une disponibilité temporaire de quantités déterminées desdits biens à des conditions spéciales, et enregistre les commandes en retour, par les mêmes liens de réseau Internet (I) ou de messagerie (5), la commande des clients.

## Description

Procédé d'établissement de relations commerciales privilégiées entre un fournisseur et au moins un client, et système de fourniture ad hoc.

La présente invention concerne l'offre en vente et la fourniture à des conditions commerciales spécifiques de biens transformés, avantageusement de fluides industriels, entre un fournisseur desdits biens et au moins un client, avantageusement relié au fournisseur par au moins une ligne de transfert de fluide industriel.

Dans le domaine des fluides industriels, tels que des gaz, du vide ou de l'électricité, le fournisseur, lié à un certain nombre de clients par des contrats de fourniture de quantités données de fluides sur des périodes déterminées dans des conditions également déterminées, dimensionne son unité de production et/ou sélectionne ses sources d'approvisionnement en fonction des prévisions de quantités à fournir selon lesdits contrats. Néanmoins, le fournisseur se retrouve fréquemment avec des disponibilités ponctuelles de capacités de production résultant notamment de baisses de consommation temporaires de certains clients, voire d'arrêts également temporaires de consommation de certains clients, suite en particulier à des opérations de maintenance.

La présente invention a pour objet de proposer un procédé et un système d'établissement de relations commerciales temporaires entre le fournisseur et un client potentiellement acheteur permettant d'informer en temps réel les clients d'opportunités de surcapacités de production et de fournitures afférentes de tels biens en surcapacité à des conditions privilégiées temporaires.

Pour ce faire, selon une caractéristique de l'invention, le procédé d'établissement de relations commerciales temporaires privilégiées entre un fournisseur de biens transformés et au moins un client acheteur potentiel d'au moins un desdits biens relié au fournisseur par au moins un système réversible de transmission d'informations, comporte les étapes suivantes :
- détection par le fournisseur d'une surcapacité de production d'au moins un desdits biens pendant une première période déterminée,
- émission par le fournisseur, via le système de transmission pendant une deuxième période déterminée, d'un message à destination d'au moins un client acheteur potentiel informant ce dernier d'une disponibilité temporaire d'au moins un desdits biens à des conditions spéciales,
- émission par le client, via le système de transmission pendant ladite deuxième période déterminée, d'un message à destination du fournisseur d'acceptation de livraison d'une certaine quantité desdits biens aux dites conditions spéciales pendant au moins une troisième période inscrite dans ladite première période.

La présente invention a également pour objet de proposer un système de fourniture au moins temporaire de biens transformés à un client pour la mise en oeuvre du procédé ci-dessus, comprenant, côté fournisseur, au moins une unité de transformation ayant un poste de commande, et au moins une sortie de fourniture de biens transformés, une unité d'élaboration de décisions en fonction de signaux d'entrée comprenant un interface conversationnel pour l'émission de messages à distance et la réception de messages en retour, l'unité d'élaboration de décisions étant reliée au poste de commande pour commander l'unité de transformation en fonction de signaux provenant de l'interface conversationnel.

L'invention sera mieux comprise en référence à la description suivante d'un mode de réalisation particulier, donné à titre illustratif mais nullement limitatif, faite en relation avec le dessin annexé, sur lequel :

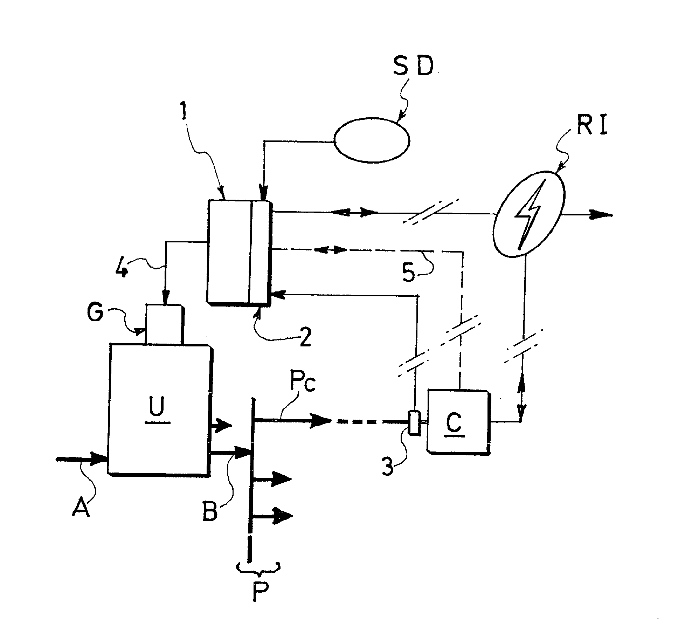

- la figure 1 est un schéma synoptique d'un exemple de système pour la mise en oeuvre d'un procédé selon l'invention.

Dans le mode de réalisation particulier représenté sur la figure 1, axé sur la fourniture, par réseaux de tuyaux, de gaz industriels, on a représenté une unité U de transformation d'une matière première A, par exemple de l'air, en au moins un produit transformé B, en l'occurrence un gaz de l'air, tel l'oxygène, l'azote ou l'argon. Le gaz B est acheminé par un réseau de canalisations P à différents clients, en particulier par une canalisation P_{c} à un client C. L'unité de transformation U est pilotée par un poste de commande G.

Selon l'invention, le fournisseur dispose d'une unité 1 d'élaboration de décisions en fonction de différents signaux d'origines extérieures traités par un interface conversationnel 2. Ces signaux sont notamment des signaux de mesure de quantités de gaz consommées élaborés par un capteur 3 sur la ligne P_{c} du client C et des informations provenant d'un système de données SD concernant des périodes de vacances, de production réduite ou de maintenance chez d'autres clients du réseau P. Ces signaux sont analysés dans l'unité 1 par des logiciels de traitement de données en fonction de modèles économiques réactualisables.

En fonction des signaux reçus, l'unité d'élaboration de décisions 1, couplée au poste de commande G par une ligne 4, permet, soit de réduire temporairement la production de l'unité U, soit de déterminer, sur au moins une période déterminée, des surcapacités de production qui seront offertes en ligne en fourniture aux différents clients du réseau P à des conditions spécifiques intégrant les surcapacités prévues et les coûts de production instantanés lors de cette période déterminée.

Selon un aspect de l'invention, cette offre de fourniture de biens à des conditions spécifiques est transmise en temps réel aux clients par l'interface conversationnel 2 via le réseau Internet RI et/ou par les liaisons de messageries électroniques 5 établies directement entre le fournisseur et certains de ses clients sur postes fixes ou portables, pagers ou SMS/Texto sur téléphones portables.

Si un client est intéressé par toute ou partie de l'offre, il émet, par les mêmes voies du réseau Internet RI ou de la messagerie 5, un message d'acceptation de livraison d'une certaine quantité desdits biens dans les conditions spéciales promises, cette « commande » étant entérinée par l'émission, toujours par les mêmes voies de communication, par le fournisseur d'un message d'accord de fourniture.

Dans un mode de réalisation particulier, si le client C dispose de son côté d'une unité d'élaboration de décisions avec interface conversationnel du type de l'unité 1, la fourniture de biens à des conditions spécifiques pourra être automatisée en fonction de plusieurs critères ou paramètres, tels les niveaux de prix de biens, la concomitance du besoin chez le client et la disponibilité du produit dans les quantités voulues chez le fournisseur.

Comme on le comprendra de la description qui précède, la solution ici proposée permet de transmettre une information immédiate et systématique, en temps réel, aux différents clients et la possibilité pour ces derniers de répondre positivement de façon également immédiate en bénéficiant de la garantie de fourniture par acceptation de la commande sans devoir se positionner sur une liste d'attente éventuelle. D'autre part, l'émission automatique d'offres aux différents clients permet au fournisseur de disposer d'informations complémentaires sur les besoins des clients respectifs et d'adapter son outil de production en conséquence.

Quoique l'invention ait été décrite en relation avec un mode de réalisation particulier, elle ne s'en trouve pas limitée mais est susceptible de modifications et de variantes qui apparaîtront à l'homme de métier dans le cadre des revendications ci-après.

## Revendications

1. Procédé d'établissement de relations commerciales temporaires privilégiées entre un fournisseur de biens transformés et au moins un client acheteur potentiel d'au moins un de ces biens relié au fournisseur par au moins un système réversible de transmission d'informations, comprenant les étapes suivantes :
a) détection par le fournisseur d'une surcapacité de production d'au moins un desdits biens pendant une première période déterminée,
b) émission par le fournisseur via le système de transmission, pendant une deuxième période déterminée, d'un message à destination au moins du client acheteur potentiel l'informant d'une disponibilité temporaire d'au moins un desdits biens à des conditions spéciales,
c) émission par le client via le système de transmission, à destination du fournisseur, pendant ladite deuxième période déterminée d'un message d'acceptation de livraison d'une certaine quantité desdits biens aux dites conditions spéciales pendant au moins une troisième période inscrite dans ladite première période, et
d) émission par le fournisseur, à destination du client, d'un message d'accord de livraison de ladite quantité desdits biens dans les conditions convenues.

2. Procédé selon la revendication 1, comprenant en outre l'étape finale e) de fourniture par le fournisseur au client desdits biens durant ladite troisième période.

3. Procédé selon la revendication 1 ou 2, dans lequel les messages sont échangés avec les clients acheteurs par liaison Internet.

4. Procédé selon la revendication 1 ou 2, dans lequel les messages sont échangés avec un acheteur régulier par liaison de courrier électronique sur postes fixes, portables ou pagers.

5. Procédé selon l'une des revendications précédentes, dans lequel le bien transformé est un fluide industriel.

6. Procédé selon la revendication 5, dans lequel le client est relié au fournisseur par au moins un circuit de transfert dudit fluide industriel.

7. Procédé selon la revendication 6, où l'étape a) comprend une mesure de la quantité de bien fourni à au moins un client.

8. Procédé selon la revendication 6 ou 7, dans lequel l'étape a) comprend la réception d'une information transmise par le client.

9. Procédé selon l'une des revendications 6 à 8, dans lequel les étapes c) à e) s'effectuent de façon automatisée.

10. Système de fourniture au moins temporaire de biens transformés à un client pour la mise en oeuvre du procédé selon l'une des revendications précédentes, comprenant, chez le fournisseur, au moins une unité de transformation (U), ayant un poste de commande (G) et au moins une sortie de fourniture de biens transformés (G) ; et une unité (1) d'élaboration de décisions en fonction de signaux d'entrées (SD ; 5 ; 3) comprenant un interface conversationnel (2) pour l'émission de messages à distance et la réception de messages en retour, l'unité d'élaboration de décisions (1) étant reliée au poste de commande (G) pour commander l'unité de transformation (U) en fonction de signaux transmis par l'interface conversationnel (2).

11. Système selon la revendication 10, pour la fourniture d'au moins un fluide industriel (B), comprenant au moins une ligne de transfert (P_{c}) entre la sortie de l'unité de transformation (U) et au moins un client (C).
